# DEMANDE DE BREVET EUROPEEN

(11) **EP 3 790 248 A1**
(43) Date de publication de la demande: **10.03.2021**
(21) Numéro de dépôt: 19196180.4
(22) Date de dépôt: 09.09.2019
(51) Int. Cl.: H04L 29/06, H04W 12/06

(54) **DISPOSITIF ELECTRONIQUE D'AUTHENTIFICATION PORTABLE**

(71) Demandeur: The Swatch Group Research and Development Ltd, 2074 Marin (CH)
(72) Inventeur: STAUFFER, Jérôme, 2000 Neuchâtel (CH); SCORDILIS, Thierry, 2036 Cormondrèche (CH); DE ROSA, Luca, 2013 Colombier (CH)
(74) Mandataire: ICB SA

(57) **Abrégé**

La présente invention concerne un dispositif électronique d'authentification portable (10) pour fournir l'accès à un site ou ressource informatique ou lieu sécurisé. Le dispositif électronique portable comprend un premier moyen de communication (11) et un second moyen de communication (12) différent du premier moyen de communication. Le premier moyen de communication est destiné à recevoir un signal d'interrogation (S_{P}) d'un dispositif de contrôle d'un système de contrôle, qui comprend le dispositif électronique portable. Le second moyen de communication est destiné à transmettre un signal réponse (S_{L}) qui comprend des données d'identification du dispositif électronique portable pour authentifier le dispositif électronique portable dans le système de contrôle et permettre l'accès à un site ou ressource informatique ou lieu sécurisé.

## Description

### DOMAINE TECHNIQUE DE L'INVENTION

L'invention concerne un dispositif électronique d'authentification portable pour avoir accès à un site informatique défini ou à un appareil ou lieu déterminé.

L'invention concerne aussi un système de contrôle comprenant un dispositif électronique d'authentification portable.

### ETAT DE LA TECHNIQUE

Comme actuellement des vols d'identité et de données personnelles sont effectués, il est nécessaire de disposer de moyens d'authentification, qui soient fiables et robustes aux différentes attaques, et simples d'utilisation. Il est notamment connu plusieurs dispositifs pour améliorer la sécurité des comptes informatiques, tels que des clés USB, des badges d'authentification, des cartes intelligentes, des capteurs biométriques, voire des applications pour téléphones mobiles. Cependant toutes ces technologies comportent de nombreux problèmes, tels que le risque de perte ou de vol, la copie et la falsification, et une utilisation fastidieuse, ce qui constitue des inconvénients.

Le brevet EP 1 420 524 B1 décrit un dispositif de communication d'information sans fil, tel qu'une montre, et un système de communication d'information sans fil à courte distance entre le dispositif et un appareil électronique. Le dispositif peut recevoir des signaux radiofréquences et transmettre une information par d'autres signaux, qui sont principalement des signaux parasites depuis l'oscillateur. D'autres moyens de communication de signaux sont aussi prévus tels que des signaux acoustiques ou des signaux lumineux. Par contre, rien n'est décrit concernant un dispositif électronique d'authentification portable donnant accès à un site Internet défini ou à un lieu déterminé.

La demande de brevet WO 2012/166115 A1 décrit un réseau de télécommunications mobiles de manière à échanger des données d'authentification avec un dispositif de communication mobile. Un premier moyen de propagation peut être utilisé tel qu'une source de radiation lumineuse infrarouge, ultraviolette ou visible, et un second moyen de propagation peut être utilisé tel que des signaux radiofréquences. Le premier moyen de propagation ne peut pas être reçu à l'extérieur de l'endroit où se trouve le dispositif de communication mobile. Le dispositif de communication mobile s'authentifie auprès du dispositif, qui lui a transmis un signal d'interrogation, mais pas auprès des dispositifs tiers, ce qui constitue un inconvénient.

La demande de brevet EP 3 419 241 A1 décrit un procédé et un système pour empêcher des attaques par relais intermédiaires pour avoir accès à un véhicule. Il est utilisé une combinaison de deux moyens de propagation différents pour la communication entre un dispositif portable (clé de voiture) et le véhicule pour authentifier le dispositif afin d'avoir accès au véhicule. Une authentification du dispositif portable est effectuée en mesurant la distance entre le dispositif portable et le véhicule par un émetteur acoustique. Le véhicule refuse des commandes transmises par signaux radiofréquences si le dispositif est trop éloigné. Cela complique l'authentification d'un tel dispositif, ce qui constitue un inconvénient.

### RESUMÉ DE L'INVENTION

L'invention a donc pour but de pallier les inconvénients cités ci-dessus avec un dispositif électronique d'authentification portable pour avoir accès à un site informatique défini ou à un appareil ou lieu déterminé sans complication, de manière semi-automatique et localisée.

A cet effet, l'invention concerne un dispositif électronique d'authentification portable, qui comprend les caractéristiques de la revendication indépendante 1.

Des formes d'exécution particulières du dispositif électronique portable sont définies dans les revendications dépendantes 2 à 8.

Un avantage du dispositif électronique d'authentification portable réside dans le fait que deux moyens de communication différents sont utilisés pour une communication d'authentification d'un dispositif portable en communication avec un dongle ou dispositif de contrôle lié à un ensemble de connexion informatique. D'une part, le premier moyen de communication est utilisé pour une communication de proximité ou faible distance si le dispositif portable se trouve proche du dongle ou dispositif de contrôle. D'autre part, le second moyen de communication est orthogonal du premier moyen de communication et peut être à longue distance.

Avantageusement, le premier moyen de communication transmet ou reçoit un signal infrarouge, optique, sonore, ultrasonore ou en champ proche (NFC). Le second moyen de communication transmet ou reçoit un signal RF, HF, UHF ou Bluetooth. Ainsi cela permet d'ajouter une couche de sécurité supplémentaire au mécanisme d'authentification car l'échange de données permettant l'authentification a lieu sur deux moyens orthogonaux dont l'un est très localisé autour de la ressource nécessitant une authentification de l'utilisateur. Le mécanisme d'authentification en soi est basé sur des technologies connues de l'homme du métier.

La présente invention porte uniquement sur l'authentification du dispositif portable et non pas sur la sécurisation des communications. De plus, le lieu où se trouve la ressource à accéder n'a pas besoin d'être opaque aux milieux de communication.

Avantageusement, avec l'authentification du dispositif portable, il peut y avoir accès automatiquement à des postes et ressources informatiques, une signature digitale de documents ou de courriers électroniques, un cryptage ou décryptage de divers documents ou courriers, un stockage sécurisé de mots de passe, et une ouverture automatique de portes avec gestion des accès aux utilisateurs.

Avantageusement, le dispositif portable est difficile à voler ou perdre, toujours avec soi, bien visible pour une connexion à un ordinateur, pratique et esthétique, désactivation possible si le dispositif est volé, mot de passe ou séquence d'identification ou autre pour réactiver la fonction une fois que le dispositif est remis au poignet s'il s'agit d'une montre-bracelet ou bracelet.

A cet effet, l'invention concerne également un système de contrôle comprenant un dispositif électronique d'authentification portable, qui comprend les caractéristiques de la revendication indépendante 9.

Des étapes particulières du système de contrôle sont définies dans les revendications dépendantes 10 à 14.

### BRÈVE DESCRIPTION DES FIGURES

Les buts, avantages et caractéristiques du dispositif électronique d'authentification portable et du système le comprenant apparaîtront mieux dans la description suivante sur la base d'au moins une forme d'exécution non limitative illustrée par les dessins sur lesquels :
- la figure 1 représente un schéma bloc simplifié des composants électroniques d'un système de contrôle ayant un dispositif électronique d'authentification portable selon l'invention, et
- la figure 2 représente plus en détail les composants électroniques du dispositif électronique d'authentification portable selon l'invention.

### DESCRIPTION DETAILLEE DE L'INVENTION

Dans la description suivante, tous les composants électroniques d'un système de contrôle ayant un dispositif électronique d'authentification portable, qui sont bien connus d'un homme du métier dans ce domaine technique, ne sont décrits que de manière simplifiée.

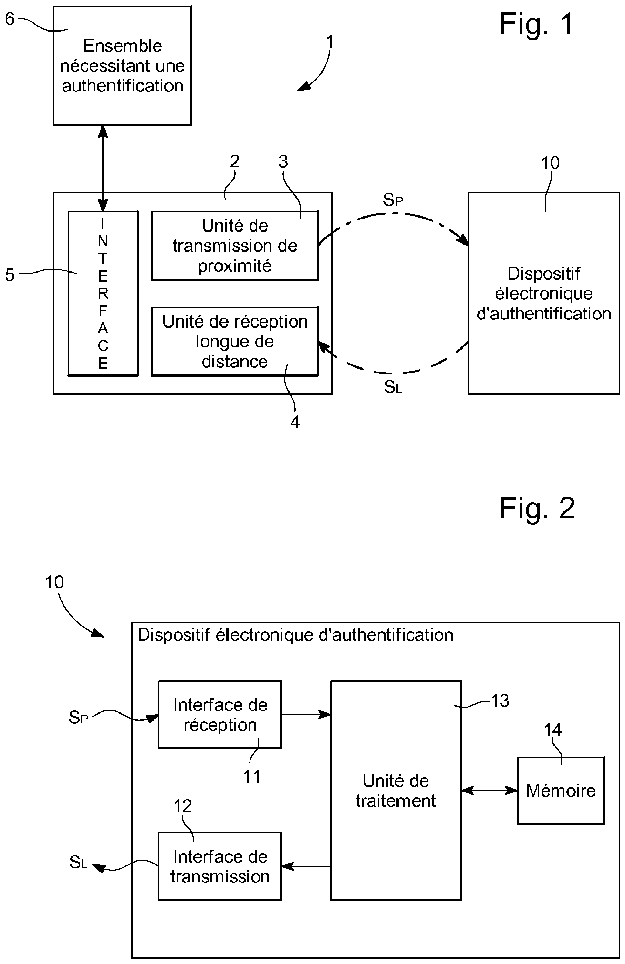

La figure 1 représente de manière schématique un système de contrôle 1, qui comprend principalement un dispositif électronique d'authentification portable 10 personnalisé à la personne le portant. Ce dispositif électronique d'authentification portable 10 peut être une montre-bracelet, un bracelet, un badge, un bijou ou un autre dispositif apte à être porté par une personne.

Le système de contrôle 1 comprend encore un dongle ou dispositif de contrôle 2, qui peut être branché ou connecté par l'intermédiaire d'une interface de connexion 5 à un ensemble 6 de connexion nécessitant une authentification du dispositif portable 10. Le dongle 2 peut être sous la forme d'une clé USB branchée à l'ensemble de connexion 6, tel qu'un ordinateur, ou être intégré à l'ensemble de connexion 6 comme du matériel informatique par exemple. L'ensemble de connexion 6 peut donc être un ordinateur portable ou fixe, un serveur informatique, une porte d'accès ou autre appareil nécessitant l'authentification du dispositif portable 10 pour l'accès à un site ou ressource informatique ou lieu sécurisé.

Le dongle ou dispositif de contrôle 2, qui est alimenté électriquement par l'ensemble de connexion 6, comprend encore un premier moyen de communication 3 pour transmettre un signal d'interrogation S_{P} (challenge) et un second moyen de communication 4, différent du premier moyen de communication 3, pour recevoir un signal réponse S_{L}. Le premier moyen de communication 3 peut être une unité de transmission de proximité 3 d'un signal d'interrogation S_{P}, alors que le second moyen de communication 4 peut être une unité de réception longue distance 4 d'un signal de réception S_{L}. Même si non représenté en figure 1, le dongle ou dispositif de contrôle 2 peut comprendre un contrôleur, tel qu'un microcontrôleur ou un réseau de portes programmables (FPGA) ou autre circuit de traitement, qui est disposé entre l'interface 5 et les unités de transmission et réception 3, 4.

Le signal d'interrogation S_{P}, qui est de préférence crypté notamment géré par l'ensemble de connexion 6 lié au dongle ou dispositif de contrôle 2, est transmis au dispositif portable 10 s'il se trouve à proximité du dongle ou dispositif de contrôle 2. Le dispositif portable 10 reçoit et décrypte le signal d'interrogation S_{P} de manière à calculer une réponse d'authentification, qu'il transmet par le signal réponse S_{L} au dongle ou dispositif de contrôle 2.

Le premier moyen de communication 3, tel que l'unité de transmission de proximité, est un moyen de communication de proximité pour la transmission un signal d'interrogation S_{P}, qui peut être un signal infrarouge, optique, ultrasonore, sonore ou en champ proche (NFC). Le second moyen de communication 4, tel que l'unité de réception longue distance, est un moyen de communication longue distance pour recevoir un signal réponse S_{L}, qui peut être un signal RF, HF, UHF, voire Bluetooth. Les moyens de transmission 3 et de réception 4 peuvent être séparés ou combinés dans un seul composant.

La figure 2 représente le dispositif électronique d'authentification portable 10. Ce dispositif portable 10 comprend un premier moyen de communication 11, tel qu'une interface de réception ou unité de réception 11 pour recevoir un signal d'interrogation S_{P} provenant du dongle ou dispositif de contrôle. De préférence, le premier moyen de communication est de proximité pour recevoir le signal d'interrogation S_{P} lorsque le dispositif portable 10 se trouve à proximité du dongle ou dispositif de contrôle. La distance de proximité peut être inférieure à 1 m. Le dispositif portable 10 comprend encore un second moyen de communication 12, tel qu'une interface de transmission ou unité de transmission 12 pour transmettre un signal réponse S_{L} en direction du dongle ou dispositif de contrôle suite au calcul d'une réponse d'authentification. Le second moyen de communication 12 peut être utilisé pour une communication à longue distance. Le dispositif portable 10 comprend encore une unité de traitement 13 reliée aux deux interfaces de réception et de transmission 11, 12 pour le traitement des signaux reçus et transmis cryptés. Une mémoire 14 peut encore être prévues pour stocker notamment des données d'identification pour authentifier la personne qui porte le dispositif portable 10. La mémoire peut être une mémoire non volatile. Le dispositif portable 10 peut être alimenté en électricité par une batterie ou pile ou une cellule solaire ou un générateur thermoélectrique, si le dispositif portable est sous la forme d'une montre-bracelet ou un bracelet.

L'unité de traitement 13 peut être par exemple un microcontrôleur, qui comprend une base de temps pour le cadencement de toutes les opérations de réception ou transmission d'un signal par les interfaces, et un module de cryptage (hardware ou software) pour le calcul d'un signal réponse S_{L}.

Il est à noter que l'interface de réception 11 et l'interface de transmission 12 peuvent être séparés ou combinés dans un seul composant ou intégrées dans un même circuit intégré avec les autres composants électroniques du dispositif portable 10

Après réception du signal réponse S_{L}, le dongle ou dispositif de contrôle du système transmet ce signal réponse S_{L} reçu à l'ensemble de connexion pour authentifier le dispositif portable 10 après une comparaison à un prototype de réponse pré-calculé dans l'ensemble de connexion, tel qu'un ordinateur relié à un réseau Internet par exemple. Si le dispositif portable est authentifié, une autorisation est fournie par l'ensemble de connexion pour avoir accès à un site ou ressource informatique ou lieu sécurisé.

A partir de la description qui vient d'être faite, plusieurs variantes de réalisation dispositif électronique d'authentification portable et du système de contrôle le comprenant sont possibles sans sortir du cadre de l'invention définie par les revendications suivantes.

## Revendications

1. Dispositif électronique d'authentification portable (10) pour fournir l'accès à un site ou ressource informatique ou lieu sécurisé,
**caractérisé en ce que** le dispositif électronique portable (10) comprend un premier moyen de communication (11) et un second moyen de communication (12) différent du premier moyen de communication (11), le premier moyen de communication (11) étant destiné à recevoir un signal d'interrogation (S_{P}) d'un dispositif de contrôle (2) d'un système de contrôle (1), qui comprend le dispositif électronique portable (10), et le second moyen de communication (12) étant destiné à transmettre un signal réponse (S_{L}) qui comprend des données d'identification du dispositif électronique portable (10) pour authentifier le dispositif électronique portable (10) dans le système de contrôle (1) et permettre l'accès à un site ou ressource informatique ou lieu sécurisé.

2. Dispositif électronique d'authentification portable (10) selon la revendication 1, **caractérisé en ce que** le premier moyen de communication (11) est un moyen de communication de proximité pour une communication à faible distance avec un dispositif de contrôle (2) d'un système de contrôle (1).

3. Dispositif électronique d'authentification portable (10) selon la revendication 1, **caractérisé en ce que** le premier moyen de communication (11) est une interface ou unité de réception (11) d'un signal d'interrogation, qui est un signal infrarouge, optique, sonore, ultrasonore ou en champ proche NFC.

4. Dispositif électronique d'authentification portable (10) selon la revendication 1, **caractérisé en ce que** le second moyen de communication (12) est un moyen de communication longue distance.

5. Dispositif électronique d'authentification portable (10) selon la revendication 4, **caractérisé en ce que** le second moyen de communication (12) est un moyen de communication longue distance pour transmettre un signal réponse RF, HF, UHF ou Bluetooth.

6. Dispositif électronique d'authentification portable (10) selon la revendication 1, **caractérisé en ce qu'**il comprend une unité de traitement (13) reliée aux premier et second moyens de communication (11, 12) pour traiter le signal d'interrogation crypté reçu (S_{P}) et calculer un signal réponse crypté (S_{L}) avec des données d'identification du dispositif électronique portable (10) pour l'authentifier.

7. Dispositif électronique d'authentification portable (10) selon la revendication 6, **caractérisé en ce que** l'unité de traitement (13) est un microcontrôleur avec un module de cryptage.

8. Dispositif électronique d'authentification portable (10) selon la revendication 1, **caractérisé en ce qu'**il est alimenté par une batterie ou pile ou une cellule solaire ou un générateur thermoélectrique.

9. Système de contrôle (1) comprenant un dispositif électronique d'authentification portable (10) selon l'une des revendications précédentes, le système de contrôle comprenant un outre un dispositif de contrôle (2) lié à un ensemble de connexion informatique (6), **caractérisé en ce que** le dispositif de contrôle (2) comprend un premier moyen de communication (3) pour transmettre un signal d'interrogation (S_{P}) au dispositif électronique d'authentification portable (10) et un second moyen de communication (4), différent du premier moyen de communication (3), pour recevoir un signal réponse (S_{L}) du dispositif électronique d'authentification portable (10).

10. Système de contrôle (1) selon la revendication 9, **caractérisé en ce que** le premier moyen de communication (3) est une unité de transmission de proximité (3) pour communiquer avec le dispositif électronique d'authentification portable (10) à faible distance.

11. Système de contrôle (1) selon la revendication 10, **caractérisé en ce que** l'unité de transmission de proximité (3) transmet un signal d'interrogation infrarouge, optique, sonore, ultrasonore ou en champ proche NFC.

12. Système de contrôle (1) selon la revendication 9, **caractérisé en ce que** le second moyen de communication (4) est une unité de réception longue distance (4) pour recevoir le signal réponse (S_{L}) du dispositif électronique d'authentification portable (10) avec des données d'identification du dispositif électronique portable (10) pour l'authentifier dans l'ensemble de connexion informatique (6).

13. Système de contrôle (1) selon la revendication 12, **caractérisé en ce que** l'unité de réception de longue distance (4) reçoit un signal réponse (S_{L}) RF, HF, UHF ou Bluetooth du dispositif électronique d'authentification portable (10).

14. Système de contrôle (1) selon la revendication 9, **caractérisé en ce que** le signal d'interrogation (S_{P}) transmis au dispositif électronique d'authentification portable (10) est crypté par l'ensemble de connexion informatique (6), et **en ce que** le signal réponse crypté (S_{L}) est reçu par le dispositif de contrôle (2) pour une authentification dans l'ensemble de connexion informatique (6).
